# EUROPEAN PATENT APPLICATION

(11) **EP 2 424 195 A1**
(43) Date of publication of application: **29.02.2012**
(21) Application number: 10766965.7
(22) Date of filing: 08.04.2010
(51) Int. Cl.: H04M 1/00, H04M 1/04, H04M 11/00

(54) **MOBILE TERMINAL HAVING DATA TRANSFER FUNCTION, AND METHOD OF CONTROLLING OPERATIONS OF MOBILE TERMINAL**

(30) Priority: 22.04.2009 JP 2009104170
(71) Applicant: Sharp Kabushiki Kaisha, Osaka-shi, Osaka 545-8522 (JP)
(72) Inventor: OKUDA, Shinya, Osaka 545-8522 (JP)
(74) Representative: Müller - Hoffmann & Partner
(86) International application number: PCT/JP2010/056373
(87) International publication number: WO 2010/122907

(57) **Abstract**

A control unit (1) detects whether or not a mobile phone (20) is in a state of data communication with an external disc device (50) through a signal input/output unit (6) and a communication path (21). During the period in which it is detected that the mobile phone (20) is in the state of data communication, an incoming call or electronic mail through an antenna (2) if detected is recorded in an incoming memory unit (5). In this period, notification of the incoming by means of a notification unit (LED unit (13), vibration unit (14), display unit (10)), however, is not performed.

## Description

### TECHNICAL FIELD

The present invention relates to a mobile terminal and a method for controlling operation of the mobile terminal, and particularly to a mobile terminal supplied with data transferred from an external device as well as a method for controlling operation of the mobile terminal.

### BACKGROUND ART

Regarding data such as telephone directory and schedule, a personal computer and a mobile phone (or PDA (Personal Digital Assistant) terminal or the like) compare their holding data to each other and communicate the data to each other so that their holding data is updated based on the result of comparison.

If the mobile phone which is performing data communication in the above-described manner is operated, the data communication is interrupted, resulting in difficulty in normally completing the data communication. In order to prevent this, Patent Literature 1 (Japanese Patent Laying-Open No. 2004-15222) provides a mobile terminal performing communication using a charger having communication capability, with a capability of preventing the mobile terminal from being detached from the charger during communication. Specifically, when the charger detects start of communication, a lock mechanism is driven to secure the mobile terminal and the charger to each other.

According to Patent Literature 2 (Japanese Patent Laying-Open No. 2000-134146), a mobile phone communicating with a personal computer is charged with power supplied from the personal computer while communicating with the personal computer. The mobile phone which is thus configured switches its power consumption mode to a normal mode or a power saving mode, based on the signal level at an input/output pin of a cable which is used for connecting the personal computer.

According to Patent Literature 3 (Japanese Patent Laying-Open No. 2002-165004), a terminal device having a wireless communication capability changes the operating condition upon detecting connection with an external device, in order to improve the communication efficiency.

### CITATION LIST

### PATENT LITERATURE

PTL 1: Japanese Patent Laying-Open No. 2004-15222
PTL 2: Japanese Patent Laying-Open No. 2000-134146
PTL 3: Japanese Patent Laying-Open No. 2002-165004

### SUMMARY OF INVENTION

### TECHNICAL PROBLEM

Patent Literature 1 (Japanese Patent Laying-Open No. 2004-15222) requires a special lock mechanism in order to prevent the mobile terminal from being detached from the charger during data communication, and therefore, the device cannot be downsized. As for Patent Literature 2 (Japanese Patent Laying-Open No. 2000-134146) and Patent Literature 3 (Japanese Patent Laying-Open No. 2002-165004), they do not disclose the configuration to prevent an inadvertent operation by a user of the mobile phone or the terminal device during data communication, in order to normally complete the data communication.

An object of the present invention is therefore to provide a mobile terminal and a method for controlling operation of the mobile terminal that can prevent the mobile terminal from being inadvertently operated during data communication with an external device.

### SOLUTION TO PROBLEM

A mobile terminal according to an aspect of the present invention includes: an incoming detection unit detecting an incoming arriving through a first communication path which includes an antenna; a notification unit for making a notification of the incoming, when the incoming detection unit detects the incoming; a data communication unit receiving data transmitted from an external device through a second communication path different from the first communication path; a communication detection unit detecting whether the data communication unit is in a state of data communication with the external device; and a notification control unit for controlling the notification of the incoming.

The notification control unit prohibits the notification of the incoming by the notification unit, when the communication detection unit detects the state of data communication.

Preferably, the notification control unit includes a message transmission unit transmitting, when the communication detection unit detects the state of data communication, a predetermined message to a sender of the incoming in response to the incoming detected by the incoming detection unit.

Preferably, the predetermined message varies depending on the sender.

Preferably, the mobile terminal further includes a memory unit and an incoming storage unit storing in the memory unit the incoming detected by the incoming detection unit, when the communication detection unit detects the state of data communication.

Preferably, the notification control unit causes the notification unit to make a notification of the incoming stored by the incoming storage unit, when the communication detection unit detects absence of the state of data communication.

Preferably, the notification control unit stores in the memory unit information received together with the incoming detected by the incoming detection unit, when the communication detection unit detects the state of data communication.

Preferably, the mobile terminal further includes an output unit outputting contents stored in the memory unit.

Preferably, the mobile terminal further includes a battery unit chargeable by a supplied electric power signal. The mobile terminal receives the electric power signal externally transmitted through the second communication path and supplies the received electric power signal to the battery unit.

According to another aspect of the present invention, a method for controlling operation of a mobile terminal including an antenna includes the steps of: detecting an incoming arriving through a first communication path which includes the antenna; making a notification of the incoming, when the incoming is detected in the step of detecting an incoming; detecting whether the mobile terminal is in a state of data communication with an external device through a second communication path different from the first communication path; and controlling the notification of the incoming.

In the step of controlling the notification, the notification of the incoming in the step of making the notification is prohibited, when it is detected, in the step of detecting, that the mobile terminal is in the state of data communication.

### ADVANTAGEOUS EFFECTS OF INVENTION

In accordance with the present invention, while the mobile terminal is communicating data through the second communication path with an external device, notification of an incoming is prohibited even if the incoming arriving through the first communication path is detected. In this way, the possibility can be reduced that the user operates the mobile terminal while the mobile terminal is communicating data with an external device, and data communication can be prevented from being interrupted by an inadvertent operation.

### BRIEF DESCRIPTION OF DRAWINGS

Fig. 1 is a configuration diagram of a data communication system according to an embodiment of the present invention.
Fig. 2 is a functional configuration diagram of a mobile phone according to the embodiment of the present invention.
Fig. 3 is a process flowchart in a standby mode of the mobile phone according to the embodiment of the present invention.
Fig. 4 is a process flowchart in a public mode of the mobile phone according to the embodiment of the present invention.
Fig. 5 is a flowchart of a notification process of the mobile phone according to the embodiment of the present invention.

### DESCRIPTION OF EMBODIMENTS

In the following, an embodiment of a data communication system of the present invention will be described with reference to the drawings. In the drawings, the same components are denoted by the same reference characters, and a detailed description thereof will not be repeated.

A data communication system of the present invention has a capability of supplying data from "information processor for supplying data" to "terminal." "Terminal" refers to an information processing terminal, such as mobile telephone (hereinafter mobile phone) or PDA, having a communication capability with an external device, an external network or the like. The present embodiment will be described with a mobile phone as an exemplary example of "terminal."

"Information processor for supplying data" has a memory unit, reads data from the memory unit, and transfers the read data to "terminal" to thereby supply the data to "terminal." As an exemplary example of "information processor for supplying data," a disc device will be applied to the present embodiment. The information processor is not limited to this, and may also be a general-purpose computer such as personal computer. The disc device records (stores) data on a disc incorporated in the device, reads the recorded data from the disc, and transmits the read data to "terminal." Particularly, a Blu-ray disc device will be applied to the present embodiment as an exemplary example that has a high recording density and a large capacity so that program data with high definition broadcast signals can be recorded.

"Terminal" in the present embodiment has multiple operation modes including "public mode." In the case of "public mode," during a data communication period in which "information processor for supplying data" is transmitting data to "terminal," an operation (output of sound, vibration, display of information for example) of outputting a notification of an incoming which arrives through an antenna is prohibited or inhibited. In the case of the public mode, even if an incoming such as incoming call is detected through a communication line, the operation of making a notification of the incoming is not carried out (is inhibited). Further, output of an alarm by means of a timer is not performed as well. In contrast, other operation modes excluding the public mode permit notification of the information as described above.

### <Hardware Configuration>

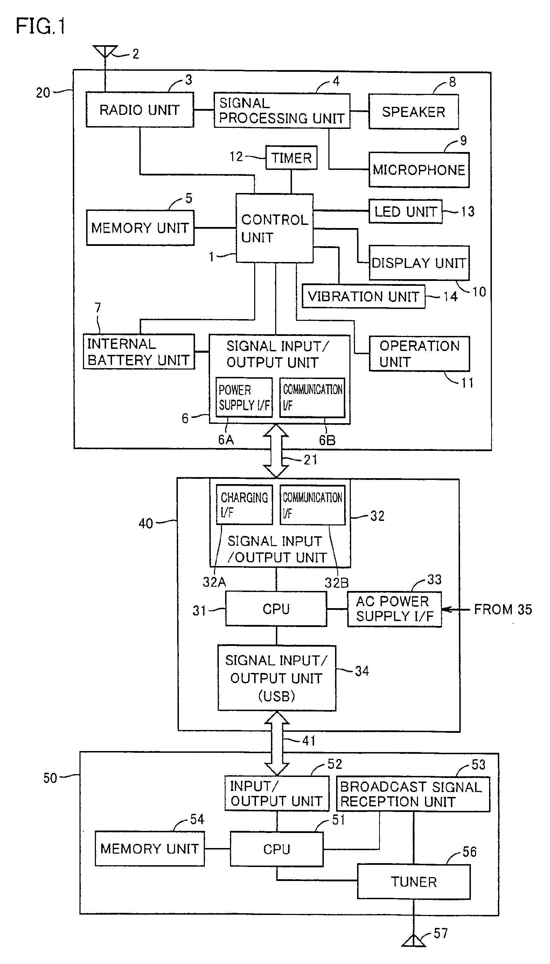

Referring to Fig. 1, the data communication system of the present embodiment includes a mobile phone 20, a Blu-ray disc device (hereinafter simply referred to as disc device) 50, and a cradle 40 relaying data communication between mobile phone 20 and disc device 50. Cradle 40 has a capability for charging mobile phone 20.

Mobile phone 20 includes a radio unit 3 having an antenna 2. Radio unit 3 performs radio communication and receives broadcast signals through a base station (not shown), in order to connect mobile phone 20 to an external network (including telephone network or the like). Mobile phone 20 further includes a control unit 1 serving as a microcomputer configured to include a CPU (Central Processing Unit), a signal processing unit 4 processing a signal received through radio unit 3, and a memory unit 5 for storing various data, programs, and the like. Mobile phone 20 also includes a signal input/output unit 6 for input/output of signals and data through a communication path 21 from/to cradle 40, a chargeable internal battery unit 7, a speaker 8 for audio output, a microphone 9 for audio input, a display unit 10 such as liquid crystal display for displaying information, and an operation unit 11 including keys, buttons and the like and externally operated to enter an instruction signal following the operation. Mobile phone 20 further includes a timer 12 for counting time, an LED (Light Emitting Diode) unit 13 with its lighting controlled for giving information about an operation state of mobile phone 20, and a vibration unit 14 made up of a compact motor or the like for vibrating mobile phone 20 itself.

An information communication path through antenna 2 corresponds to a first communication path, and communication path 21 used for receiving data from external disc device 50 corresponds to a second communication path different from the first communication path.

Signal input/output unit 6 includes a power supply I/F (Interface) 6A and a communication I/F (Interface) 6B. Signal input/output unit 6 receives an electric power signal and a data signal from cradle 40 through communication path 21. Power supply I/F 6A receives the electric power signal which is supplied through communication path 21, and supplies the received electric power signal to internal battery unit 7. Internal battery unit 7 charges an internal battery based on the supplied electric power signal. Communication I/F 6B receives the data signal which is provided from cradle 40 through communication path 21, and provides the received data signal to control unit 1. Control unit 1 receives the provided data signal, processes the received data signal, and stores the resultant data in a predetermined region of memory unit 5.

Disc device 50 includes a CPU 51, an input/output unit 52 for input and output of data and signals for example from and to cradle 40, a tuner 56 connected to an antenna 57 for receiving program broadcast signals transmitted from broadcast stations, a broadcast signal reception unit 53 for processing broadcast signals received by tuner 56, and a memory unit 54. Memory unit 54 includes a rewritable Blu-ray disc used for storing various data including received program data.

Cradle 40 includes a CPU 31, a signal input/output unit 32, an AC (Alternating Current) power supply I/F (Interface) 33 for receiving an electric power signal from an external commercial AC power supply 35, and a signal input/output unit 34. Signal input/output unit 32 receives/supplies data and an electric power signal from/to mobile phone 20. Signal input/output unit 34 receives/supplies data and signals from/to disc device 50 through communication path 41.

Signal input/output unit 32 includes a power supply I/F 32A for supplying the electric power signal to mobile phone 20, and a communication I/F 32B for supplying data to mobile phone 20. Cradle 40 has a part on which mobile phone 20 is placed. When mobile phone 20 is placed on this part, signal input/output unit 6 of mobile phone 20 and signal input/output unit 32 of cradle 40 are connected so that communication can be done through communication path 21. In such a state of connection, cradle 40 transmits the electric power signal supplied from AC power supply 35 to mobile phone 20, and transmits data received from disc device 50 to mobile phone 20.

Here, communication path 21 and communication path 41 may be wired communication paths through cables, or IrDA (Infrared Data Association) or Bluetooth (registered trademark) wireless communication paths.

In the case where cradle 40 is connected with mobile phone 20 through a cable of communication path 21, a cable's connection terminal to be connected with mobile phone 20 is detachably connected to signal input/output unit 6. Likewise, in the case where cradle 40 is connected with disc device 50 through a cable of communication path 41, a cable's connection terminal to be connected with disc device 50 is detachably connected to input/output unit 52.

It is supposed that communication is performed through communication path 21 and communication path 41 in accordance with the USB (Universal Serial Bus) protocol. The USB protocol is applied to general home electric appliances and is thus versatile. Here, the protocol to be applied is not limited to the USB protocol.

### <Functional Configuration>

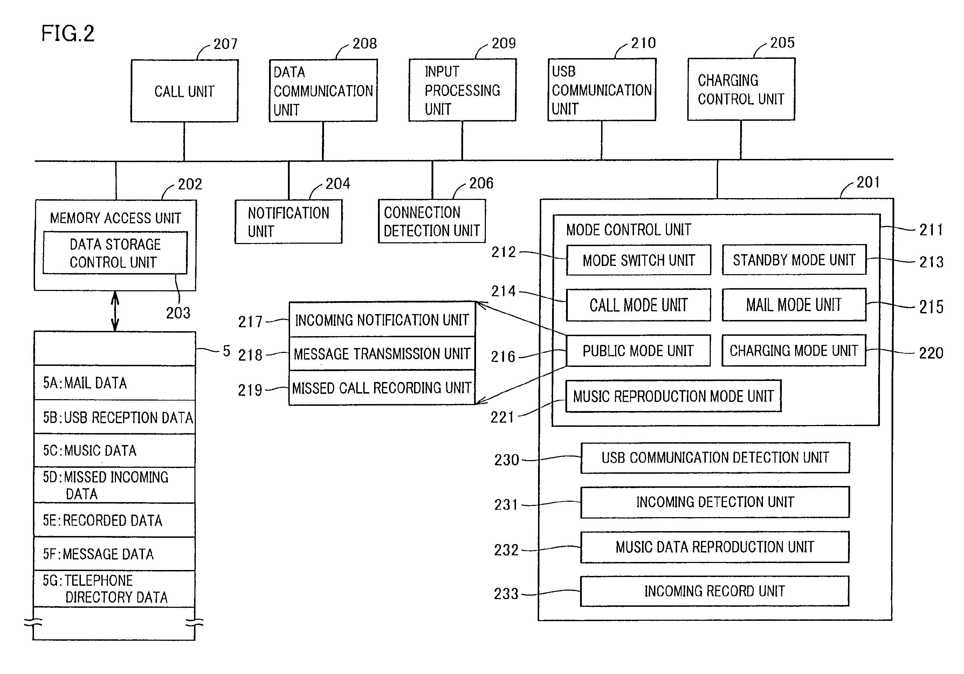

Fig. 2 shows a functional configuration of mobile phone 20 that is implemented by software such as program and data or by hardware. Referring to Fig. 2, mobile phone 20 includes a control unit 201 corresponding to control unit 1, a memory access unit 202 controlling access (read/write) to memory unit 5, a notification unit 204, a charging control unit 205 controlling a battery charging operation of internal battery unit 7, a connection detection unit 206 for detecting connection of mobile phone 20 with cradle 40, a call unit 207 controlling calls to/from an external terminal through radio unit 3 and antenna 2, a data communication unit 208 controlling data communication with an external terminal through radio unit 3 and antenna 2, an input processing unit 209 processing an input signal given through operation of operation unit 11, and a USB communication unit 210 controlling communication with cradle 40 in accordance with the USB protocol.

Memory access unit 202 has a data storage control unit 203 controlling storage of data in memory unit 5.

Notification unit 204 outputs a notification of an operation mode of mobile phone 20. In the case where an incoming is detected in an operation mode other than the public mode, the notification unit outputs a notification that the incoming arrives, by means of sound, vibration, LED, display of an image or the like.

Connection detection unit 206 detects that a signal is input from signal input/output unit 6 through communication path 21 and accordingly detects that cradle 40 is connected. Alternatively, in the case where signal input/output unit 6 has a connection terminal to be connected with the cable of communication path 21, the connection detection unit detects a change of the signal level of the connection terminal from OFF to ON and accordingly detects that cradle 40 is connected to mobile phone 20.

Control unit 201 includes a mode control unit 211, a USB communication detection unit 230, an incoming detection unit 231, a music data reproduction unit 232, and an incoming record unit 233.

Mode control unit 211 includes a mode switch unit 212 switching the operation mode of mobile phone 20, and mode units for controlling different operation modes respectively. The mode units include a standby mode unit 213 for allowing mobile phone 20 to be on standby for an incoming and an external operation for example, a call mode unit 214 controlling a call operation, a mail mode unit 215 controlling transmission and reception of electronic mails, a public mode unit 216, a charging mode unit 220 controlling a battery charging operation of internal battery unit 7 by means of an electric power signal that is input from power supply I/F 6A, and a music reproduction mode unit 221 controlling reproduction of music data.

Public mode unit 216 corresponds to a notification control unit that prohibits a notifying operation by notification unit 204, when it is detected that mobile phone 20 is communicating data with disc device 50 through communication path 21. Public mode unit 216 includes an incoming notification unit 217 for outputting a notification that an incoming arrives through antenna 2, a message transmission unit 218 for transmitting, when an incoming is detected, a response message (a message like "the call cannot be answered") to the sender/caller terminal, and a missed call recording unit 219. Missed call recording unit 219 stores in memory unit 5 a message left by an incoming call arrived in receiver's absence (in a period in which the user is in the state of being unable to operate mobile phone 20, in the user's absence, for example).

USB communication detection unit 230 monitors data that is input and output through communication I/F 6B. USB communication detection unit 230 detects a frame of a format that follows the USB protocol and accordingly detects that USB communication is carried out.

Memory unit 5 stores various data including mail data 5A that is data of transmitted/received mails, USB reception data 5B that is data received through cradle 40, music data 5C that is read by music data reproduction unit 232 and output from speaker 8, missed incoming data 5D, recorded data 5E, message data 5F, and telephone directory data 5G. Missed incoming data 5D is data (such as telephone number) indicating the sender of an incoming which was detected in receiver's absence. Recorded data 5E is a message left by an incoming call arrived in the receiver's absence. Message data 5F refers to a message to be transmitted to the sender of an incoming which arrived in the receiver's absence. These data are read from memory access unit 202 and displayed on display unit 10 or output in the form of voice from speaker 8.

### <General Operation>

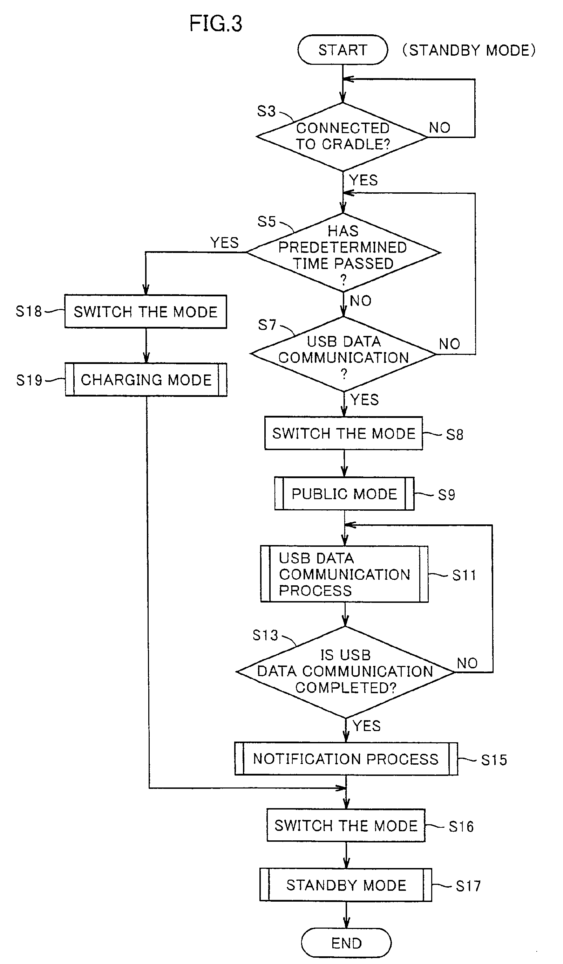

Following a flowchart of Fig. 3, a description will be given of a process of shifting the operation mode of mobile phone 20 from the standby mode to another operation mode.

It is supposed that the operation mode of mobile phone 20 is now the standby mode under control of standby mode unit 213. Mode switch unit 212 causes the operation mode to change from the standby mode to another operation mode, when a detection signal indicating that incoming of a call or data such as electronic mail is detected by call unit 207 or data communication unit 208, is received from incoming detection unit 231, or when a detection signal is received that indicates that connection of mobile phone 20 to cradle 40 is detected by connection detection unit 206.

When mode switch unit 212 detects that cradle 40 is connected to mobile phone 20, based on the detection signal received from connection detection unit 206 (YES in step S3), mode switch unit 212 determines, based on time data which is output from timer 12, whether or not a predetermined time has passed from the time when the connection was detected (step S5). When USB communication detection unit 230 detects data communication following the USB protocol through communication I/F 6B and outputs the detection signal in this predetermined time (YES in step S7), mode switch unit 212 receives this detection signal and, based on the received detection signal, switches the operation mode from the standby mode to the public mode (step S8). Specifically, standby mode unit 213 is set in a standby state and public mode unit 216 is activated (step S9). While data communication following the USB protocol is not detected, the operation from step S5 to step S7 is repeated.

In contrast, when data communication which follows the USB protocol is not detected even when the predetermined time has passed from the time when connection with cradle 40 was detected (YES in step S5), mode control unit 211 switches the operation mode from the standby mode to a charging mode (step S18). Specifically, standby mode unit 213 is set in a standby state, and charging mode unit 220 is activated (step S19). Accordingly, charging mode unit 220 causes the battery of internal battery unit 7 to be charged through cradle 40 (step S19). When charging is completed, charging mode unit 220 outputs a detection signal indicating that charging is completed. When mode control unit 211 receives this detection signal, the mode control unit 211 switches the operation mode from the charging mode to the standby mode (step S16). Specifically, charging mode unit 220 is set in a standby state and standby mode unit 213 is activated (step S17).

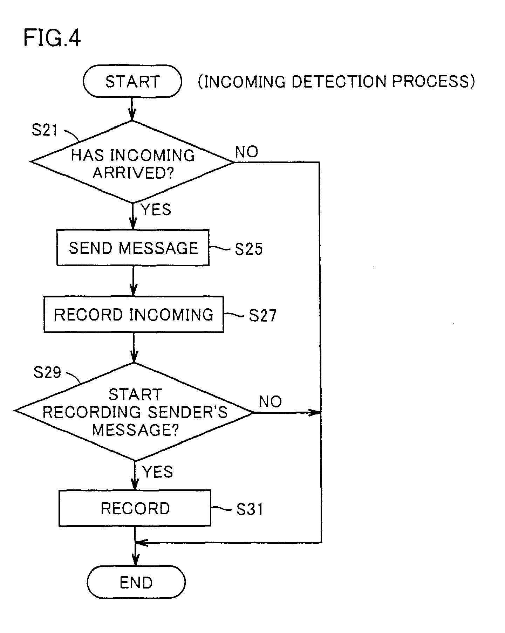

When data communication following the USB protocol is detected in the predetermined time (YES in step S7), mode control unit 211 sets standby mode unit 213 in the standby state and activates public mode unit 216, in order to switch the operation mode from the standby mode to the public mode (step S9). Thus, under control of public mode unit 216, USB communication unit 210 and data storage control unit 203 of memory access unit 202 perform a USB data communication process which is reception of data and storage of the received data in memory unit 5 in accordance with the USB protocol (step S11). The USB data communication process is repeated while USB communication detection unit 230 does not detect completion of the data communication following the USB protocol (NO in step S13). In the public mode, the flowchart of Fig. 4 described later herein is followed to detect an incoming and perform a predetermined process for the detected incoming.

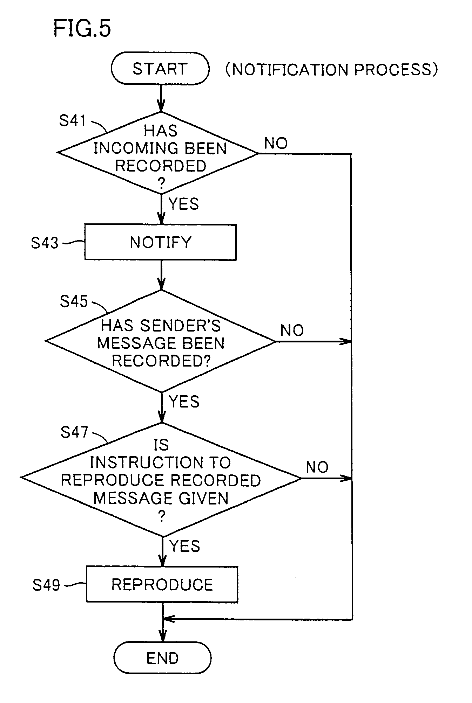

When USB communication detection unit 230 detects completion of the data communication following the USB protocol (YES in step S13), public mode unit 216 receiving the detection signal accordingly controls the operation of incoming notification unit 217. Incoming notification unit 217 performs a notification process following Fig. 5 described later herein, in order to make a notification that an incoming arrives, which is detected by incoming detection unit 231 during the USB data communication (step S15).

After the incoming notification process is performed, mode control unit 211 switches the operation mode of mobile phone 20 from the public mode to the standby mode. Specifically, public mode unit 216 is set in the standby state and standby mode unit 213 is activated (step S17).

### <Incoming Detection in Public Mode>

In the process of receiving data and storing the received data following the USB protocol in the public mode (step S11), the received data is stored as USB reception data 5B in memory unit 5, by data storage control unit 203 of memory access unit 202.

In the public mode, public mode unit 216 notifies the user that data is being communicated through communication path 21. For example, a message such as "data communication is in progress" may be displayed by display unit 10. Alternatively, an LED of LED unit 13 may be lit or the LED may be adapted to emit light of a predetermined color.

In the public mode including the period of data communication in step S11, the process in Fig. 4 concerning detection of an incoming is performed.

Specifically, incoming detection unit 231 detects whether or not an incoming call or incoming data communication has arrived through call unit 207 or data communication unit 208 (step S21). When these incomings are not detected (NO in step S21), the process in Fig. 4 is ended, and data is received and stored following the USB protocol as shown in step S11.

When an incoming is detected (YES in step S21), message transmission unit 218 reads message data 5F from memory unit 5 through memory access unit 202, and transmits the read message data 5F to the sender terminal having sent the incoming (step S25). Thus, the sender terminal is given a message that currently the receiver is unable to answer calls.

Then, incoming record unit 233 detects the time the incoming arrived, based on timer 12, associates the detected time with information (such as telephone number) that identifies the sender terminal which has sent the incoming, and stores them as missed incoming data 5D in memory unit 5 through memory access unit 202 (step S27). When the incoming is a mail, the received mail data is stored as mail data 5A.

Subsequently, missed call recording unit 219 detects whether a voice message transmitted from the sender terminal has been received (step S29). When it is detected that the message has been received (YES in step S29), missed call recording unit 219 stores in memory unit 5 data of the received voice message as recorded data 5E, together with the data of the time the incoming arrived (step S31). When reception of a voice message is not detected (NO in step S29), the process in Fig. 4 is ended.

Thus, in the public mode in which data is being communicated, the operation of detecting an externally given incoming is repeated. Even if an incoming is detected, information about the incoming is not output but stored in memory unit 5. Mobile phone 20 can thus be prevented from being inadvertently operated by a user during data communication through communication path 21, and interruption of data communication can be prevented.

### <Notification Process in Public Mode>

Referring to Fig. 5, a description will be given of a process (step S15) of making a notification of information about an incoming which was detected during data communication, after the data communication following the USB protocol is completed.

Incoming notification unit 217 searches for missed incoming data 5D in memory unit 5 through memory access unit 202 and determines, based on the result of search, whether or not an incoming was detected in an immediately preceding data communication period (step S41). The immediately preceding data communication period has been timed by timer 12. Incoming notification unit 217 compares the time data of timer 12 indicating the data communication period with the time data of missed incoming data 5D and determines, based on the result of comparison, whether or not an incoming was detected in the data communication period.

When it is determined that the incoming was detected in the data communication period (YES in step S41), incoming notification unit 217 makes a notification that the incoming has arrived (step S43). The notification is made by means of lighting control of the LED by LED unit 13, display of a predetermined message by display unit 10, voice output by speaker 8, or vibration of mobile phone 20 by vibration unit 14, for example.

Subsequently, incoming notification unit 217 searches for recorded data 5E through memory access unit 202 and determines, based on the result of search, whether or not recorded data in the data communication period is stored (step S45). When it is determined that the recorded data is stored (YES in step S45), incoming notification unit 217 reads recorded data 5E from memory unit 5, and controls the output of speaker 8 based on the read recorded data 5E. Thus, the message recorded by the sender is output in the form of voice from speaker 8 (step S49). This recorded data 5E may be reproduced (output in the form of voice) only when the user has operated operation unit 11 to input, in advance, an instruction to reproduce the recorded data (YES in step S47).

In the case where an incoming was not detected during data communication (NO in step S41), the process in Fig. 5 is ended. In the case where recorded data 5E is not stored in memory unit 5 (NO in step S45), a notification that the incoming has arrived is made (step S43) and thereafter the process in Fig. 5 is ended. In the case where recorded data 5E is stored in memory unit 5, but an instruction to reproduce the data has not been given (NO in step S47), a notification that the incoming has arrived is made (step S43) and thereafter the process in Fig. 5 is ended.

Here, during data communication with disc device 50 following the USB protocol, if incoming of data having a relatively large size is detected through antenna 2 (incoming of an electronic mail to which attached image data of a relatively large size for example), temporarily it is impossible for control unit 1 to receive data from disc device 50 because control unit 1 has to receive the incoming data.

In order to address this issue, cradle 40 includes a buffer having a capacity of a predetermined size. In the period in which an incoming mail of a relatively large size arrives and accordingly the processing ability of control unit 1 is applied to a process for the incoming mail data rather than data communication with disc device 50, the buffer of cradle 40 stores the data transferred from disc device 50. After this, at the time when control unit 1 becomes able to perform data processing, cradle 40 may read the data from the buffer and transmit the data to mobile phone 20. If the buffer is not used, the data that mobile phone 20 could not receive from disc device 50 in the above-described period may be transmitted again from disc device 50.

If another mobile phone 20 also uses this cradle 40, cradle 40 identifies the ID (identifier) of this mobile phone 20. Based on identification, cradle 40 permits only mobile phone 20 to which a pre-designated ID is allocated to perform data communication with disc device 50. If a mobile phone 20 having an ID which is not designated is connected to cradle 40, cradle 40 does not permit (inhibits) data communication with disc device 50, and activates only the charging capability of charging control unit 205. While it has been described that cradle 40 identifies the ID, mobile phone 20 may determine whether its ID is a pre-designated ID or not.

In the case where mobile phone 20 which is communicating data with disc device 50 detects an incoming through antenna 2 and thereafter transmits a message to the sender terminal which has sent the incoming, mobile phone 20 may vary the type (contents) of the message depending on the sender.

While data communication is performed through cradle 40 in the embodiment above, mobile phone 20 and disc device 50 may communicate data to each other without cradle 40 therebetween.

The above embodiment disclosed herein is by way of illustration in all respects, not by way of limitation. It is intended that the technical scope of the present invention is defined by claims, and encompasses all modifications and variations equivalent in meaning and scope to the claims.

### REFERENCE SIGNS LIST

202 memory access unit; 203 data storage control unit; 204 notification unit; 205 charging control unit; 206 connection detection unit; 207 call unit; 208 data communication unit; 209 input processing unit; 210 USB communication unit; 211 mode control unit; 212 mode switch unit; 213 standby mode unit; 216 public mode unit; 220 charging mode unit; 230 USB communication detection unit; 231 incoming detection unit; 217 incoming notification unit; 218 message transmission unit; 219 missed call recording unit.

## Claims

1. A mobile terminal (20) comprising:
an incoming detection unit (231) detecting an incoming arriving through a first communication path which includes an antenna (2);
a notification unit for making a notification of the incoming, when said incoming detection unit detects said incoming;
a data communication unit (208) receiving data transmitted from an external device (50) through a second communication path different from said first communication path;
a communication detection unit (230) detecting whether said data communication unit is in a state of data communication with said external device; and
a notification control unit (216) for controlling the notification of said incoming,
said notification control unit prohibiting the notification of said incoming by said notification unit, when said communication detection unit detects said state of data communication.

2. The mobile terminal according to claim 1, wherein
said notification control unit includes a message transmission unit (218) transmitting, when said communication detection unit detects said state of data communication, a predetermined message to a sender of the incoming in response to said incoming detected by said incoming detection unit.

3. The mobile terminal according to claim 2, wherein
said predetermined message varies depending on the sender.

4. The mobile terminal according to claim 1, further comprising:
a memory unit (5); and
an incoming storage unit storing in said memory unit said incoming detected by said incoming detection unit, when said communication detection unit detects said state of data communication.

5. The mobile terminal according to claim 4, wherein
said notification control unit causes said notification unit to make a notification of said incoming stored by said incoming storage unit, when said communication detection unit detects absence of said state of data communication.

6. The mobile terminal according to claim 4, wherein
said notification control unit stores in said memory unit information received together with said incoming detected by said incoming detection unit, when said communication detection unit detects said state of data communication.

7. The mobile terminal according to claim 4, further comprising an output unit outputting contents stored in said memory unit.

8. The mobile terminal according to claim 1, further comprising a battery unit (7) chargeable by a supplied electric power signal, wherein
the mobile terminal receives said electric power signal externally transmitted through said second communication path, and supplies said received electric power signal to said battery unit.

9. A method for controlling operation of a mobile terminal (20) including an antenna (2), comprising the steps of:
detecting an incoming arriving through a first communication path which includes said antenna;
making a notification of the incoming, when said incoming is detected in said step of detecting an incoming;
detecting whether said mobile terminal is in a state of data communication with an external device through a second communication path different from said first communication path; and
controlling the notification of said incoming, wherein
in said step of controlling the notification, the notification of said incoming in said step of making the notification is prohibited, when it is detected, in said step of detecting, that said mobile terminal is in said state of data communication.

## Amended claims

### Amended claims under Art. 19.1 PCT

**1.** (amended) A mobile terminal (20) comprising:
an incoming detection unit (231) detecting an incoming arriving through a first communication path which includes an antenna (2);
a notification unit for making a notification of the incoming, when said incoming detection unit detects said incoming;
a data communication unit (208) receiving data transmitted from an external device (50) through a second communication path different from said first communication path;
a communication detection unit (230) detecting whether said data communication unit is in a state of data communication with said external device;
a notification control unit (216) for controlling the notification of said incoming;
a memory unit (5); and
an incoming storage unit storing in said memory unit said incoming detected by said incoming detection unit, when it is detected that said data communication unit is in said state of data communication,
said notification control unit prohibiting the notification of said incoming by said notification unit, when it is detected that said data communication unit is in said state of data communication.

**2.** (cancelled)

**3.** (cancelled)

**4.** (cancelled)

**5.** (amended) The mobile terminal according to claim 1, wherein
said notification control unit causes said notification unit to make a notification of said incoming stored by said incoming storage unit, when it is detected that said data communication unit is not in said state of data communication.

**6.** (amended) The mobile terminal according to claim 1, wherein
information received together with said incoming detected by said incoming detection unit is stored in said memory unit, when it is detected that said data communication unit is in said state of data communication.

**7.** (amended) The mobile terminal according to claim 1, further comprising an output unit outputting contents stored in said memory unit.

**8.** (amended) The mobile terminal according to claim 1, further comprising a battery unit (7) chargeable by an electric power signal, wherein
the mobile terminal receives said electric power signal externally transmitted through said second communication path, and supplies said received electric power signal to said battery unit.

**9.** (amended) The mobile terminal according to claim 1, wherein
a cradle (40) is detachably connected to said mobile terminal, and
said connected cradle transmits said electric power signal to said second communication path.

**10.** (added) The mobile terminal according to claim 9, further comprising a connection detection unit (206) detecting whether said cradle is connected, and
when a state of said data communication unit is not shifted to said state of data communication within a predetermined time from the time when it is detected that said cradle is connected, said mobile terminal starts receiving said electric power signal from said cradle.

**11.** (added) The mobile terminal according to claim 9, wherein
said cradle is shared by different said mobile terminals,
said cradle transmits externally supplied data to said second communication path,
to said different mobile terminals, respective identifiers are allocated for identifying said mobile terminals, and
when said cradle is connected to said mobile terminal, data communication through said second communication path is permitted based on said identifier allocated to said mobile terminal.

**12.** (added) The mobile terminal according to claim 9, wherein
said cradle includes a memory,
said cradle transmits externally supplied data to said second communication path, and
when said incoming detection unit detects an incoming mail as said incoming, while said data communication unit is receiving data from said cradle, said cradle stores, in said memory, data supplied after the incoming mail is detected, instead of transmitting the data to said second communication path.

**13.** (added) A method for controlling operation of a mobile terminal (20) including an antenna (2), comprising the steps of:
detecting an incoming arriving through a first communication path which includes said antenna;
making a notification of the incoming, when said incoming is detected in said step of detecting an incoming;
detecting whether said mobile terminal is in a state of data communication with an external device through a second communication path different from said first communication path;
controlling the notification of said incoming; and
storing in a memory unit said detected incoming when it is detected that said mobile terminal is in said state of data communication, wherein
in said step of controlling the notification, the notification of said incoming in said step of making a notification is prohibited, when it is detected, in said step of detecting, that said mobile terminal is in said state of data communication.
